Europäisches Patentamt

European Patent Office

Office européen des brevets

(11) Numéro de publication: **0 487 370 B1**

(12) **FASCICULE DE BREVET EUROPEEN**

(45) Date de publication du fascicule du brevet: **30.08.95** (51) Int. Cl.⁶: **B01D 53/34**, C07C 7/12

(21) Numéro de dépôt: **91402901.2**

(22) Date de dépôt: **29.10.91**

(54) Procédé d'élimination d'arsenic dans un gaz par passage sur une masse à base d'un support et de sulfure de cuivre.

(30) Priorité: **30.10.90 FR 9013598**

(43) Date de publication de la demande:
**27.05.92 Bulletin 92/22**

(45) Mention de la délivrance du brevet:
**30.08.95 Bulletin 95/35**

(84) Etats contractants désignés:
**DE ES GB IT NL SE**

(56) Documents cités:
**WO-A-90/10684**
**US-A- 2 781 297**
**US-A- 4 094 777**
**US-A- 4 902 662**

(73) Titulaire: **INSTITUT FRANCAIS DU PETROLE**
**4, Avenue de Bois Préau**
**F-92502 Rueil-Malmaison (FR)**

(72) Inventeur: **Cameron, Charles**
**28, Henri Barbusse**
**F-75005 Paris (FR)**
Inventeur: **Courty, Philippe**
**91, rue Condorcet**
**F-78800 Houilles (FR)**
Inventeur: **Boitiaux, Jean-Paul**
**4, avenue des Ursulines**
**F-78300 Poissy (FR)**

## Description

La présente invention concerne un procédé d'élimination d'arsenic, en présence ou en absence de mercure, dans une charge gazeuse. Ce procédé est caractérisé par l'utilisation d'une masse de captation comportant un support et un composé de sulfure de cuivre.

Il est connu que le gaz naturel et les condensats associés peuvent contenir de nombreux composés métalliques tels que l'arsenic et le mercure à l'état de traces, généralement présents sous forme élémentaire (Hg par exemple), sous forme hydrure ($AsH_3$ par exemple) ou par exemple encore sous forme organométallique ($AsR_3$ et $HgR'_2$ où au moins l'un des 3 radicaux R est une fonction hydrocarbonée et au moins un des 2 radicaux R' est une fonction hydrocarbonée,.R et/ou R' pouvant être un atome d'hydrogène) L'élimination des deux types de composés métalliques est importante pour assurer le bon fonctionnement (1) des catalyseurs en aval de l'unité de captation qui sont empoisonnés par ces composés et (2) des échangeurs de chaleur qui sont sensibles à la présence de mercure.

Il a été découvert qu'une masse de captation, le sulfure de cuivre supporté, qui est bien connue pour éliminer le mercure en phases gazeuse et liquide est aussi très efficace pour éliminer l'arsenic en phase gazeuse.

Il est connu que les oxydes de fer, cobalt, nickel, plomb, cuivre et molybdène et les sulfures de fer, cobalt et nickel sont plus ou moins efficaces pour la désarsénification des fluides hydrocarbonés (voir par exemple les brevets US-A-4 003 829, US-A-4 601 998 ainsi que US-A-4 849 577 de la demanderesse).

Des sels de cuivre tels que sulfate, chlorure, bromure, fluorure, iodure, nitrate, acétate et formate sont également connus, par le brevet US-A-2 781 297, pour leur aptitude à capter l'arsenic dans des liquides, telles que des fractions pétrolières liquides. Les conditions opératoires en pression sont de 0,35 à 70 bar ($0,35.10^5$ à 70. $10^5$ Pa) et en température 20°C à 260°C, la masse de captation contenant 0,1 à 20 % en poids de cuivre, et de préférence 1 à 10 %.

La demande de brevet WO 90/10684 décrit également un procédé d'élimination d'arsenic et de mercure dans des fractions pétrolières liquides. Le procédé comporte une première étape consistant à mettre en contact la fraction à traiter avec une première masse de captation d'arsenic à propriétés catalytiques puis à faire circuler ladite fraction sur une seconde masse de captation, à base de sulfure de cuivre.

La première masse retient une grande partie de l'arsenic et active les composés d'arsenic restants, la seconde masse retient le mercure et l'arsenic activé.

La présente invention concerne un procédé d'élimination d'arsenic dans une charge gazeuse constituée notamment par un gaz naturel et/ou un condensat de gaz naturel en phase gazeuse, procédé dans lequel la charge circule sur une masse solide de captation constituée d'un support et d'au moins un composé de sulfure de cuivre.

Bien entendu, toutes les méthodes synthétiques connues de l'Homme du métier pour la préparation d'une masse renfermant au moins du sulfure de cuivre et un support minéral peuvent être utilisées pour la présente invention. A titre d'exemples on citera les masses de captation qui ont été préparées dans le brevet US-A-4 094 777, et le brevet US-A-4 902 662 de la demanderesse.

Le brevet US-A-4 094 777 décrit un procédé de préparation de masse de captation comprenant l'incorporation d'un composé du cuivre à un support minéral, suivie d'une sulfuration à une température inférieure à 300°C.

La sulfuration selon le procédé décrit dans ce brevet est effectuée à l'aide d'un agent gazeux, par exemple le sulfure d'hydrogène, ou d'une solution d'un sulfure minéral dans l'eau ou dans un solvant organique, par exemple une solution aqueuse de sulfure de sodium, de sulfure de potassium ou de sulfure d'ammonium.

Le brevet US-A-4 902 662 décrit un procédé de préparation d'une masse de captation comprenant l'incorporation d'un composé du cuivre à un support minéral suivie d'une sulfuration à une température habituellement inférieure à 250°C.

La sulfuration selon le procédé décrit dans ce brevet est effectuée à l'aide d'un polysulfure organique de formule générale $R_1-S_{(n)}-R_2$ dans laquelle n représente un nombre entier de 2 à 20, $R_1$ représente un atome d'hydrogène ou un radical organique renfermant de 1 à 150 atomes de carbone, choisi dans le groupe formé par les radicaux alkyles saturés ou insaturés, linéaires ou ramifiés ou de type naphténique, les radicaux aryles, les radicaux alkylaryles et les radicaux arylalkyles, et $R_2$ représente un radical organique identique ou différent de $R_1$ renfermant de 1 à 150 atomes de carbone choisi dans le groupe des radicaux organiques défini pour $R_1$.

Selon un autre mode de réalisation préféré, le procédé de préparation de la masse solide de captation comprend les étapes suivantes :

a) l'incorporation au moins un composé de cuivre, autre qu'un sulfure, à un support ou dispersant minéral solide.

b) la calcination dans l'hypothèse où ledit composé n'est pas l'oxyde de cuivre, du produit obtenu à l'étape (a) de manière à transformer au moins en partie le ou les composés de cuivre qu'il contient en oxyde de cuivre (CuO et/ou $Cu_2O$

c) la mise en contact du produit obtenu contenant de l'oxyde de cuivre avec du soufre élémentaire qui est dissous éventuellement au moins en partie dans un solvant organique.

d) un traitement thermique du produit obtenu à l'étape (c), en atmosphère non oxydante, sous balayage de gaz, à une température et pendant un temps suffisant pour permettre la formation de sulfure du ou des métaux présents et notamment pour combiner au moins 50 % du cuivre sous forme de sulfure de cuivre $Cu_xS_y$ où x et y sont chacun un nombre entier de 1 à 10.

Les supports ou dispersants minéraux solides qui peuvent être utilisés pour la masse comprenant le sulfure de cuivre sont habituellement choisis dans le groupe formé par le charbon, le charbon actif, le coke, la silice, le carbure de silicium, le gel de silice, les silicates synthétiques ou naturels, les argiles, les terres à diatomées, les terres à foulon, le kaolin, la bauxite, les oxydes inorganiques réfractaires tels que par exemple l'alumine, l'oxyde de titane, la zircone, la magnésie, les silices-alumines, les silices-magnésies et les silices-zircones, les mélanges alumines-oxyde de bore, les aluminates, les silico-aluminates, les alumino-silicates zéolitiques cristallins, synthétiques ou naturels, par exemple les mordénites, les faujasites, les offrétites, les érionites, les ferriérites, les zéolites ZSM5 et ZSM11, les mazzites, et les ciments tels que par exemple ceux de type Secar® produits par la société Lafarge.

On utilise de préférence un support choisi dans le groupe formé par le charbon, le charbon actif, le coke et encore plus avantageusement la silice, les alumines, les silices-alumines, les silicates, les aluminates et les silico-aluminates (zéolitiques par exemple). L'alumine est le support privilégié.

Lorsque les masses de captation d'arsenic sont destinées à être utilisées dans le traitement de charges contenant des hydrocarbures condensables (par exempte $C_4$ ou supérieur à $C_4$) à une température située dans la gamme de température à laquelle s'effectue la captation, on a constaté que les masses ayant un diamètre moyen de pores au moins égal à 100 Angströms ($10^{-8}$ m) présentent une stabilité accrue.

Les conditions d'obtention de masses (ou de supports destinés à fabriquer ces masses) présentant un diamètre moyen de pores d'au moins 100 Angströms ($10^{-8}$ m) sont suffisamment bien connues de l'Homme du métier pour ne pas être répétées ici, dans le cadre de la présente invention (voir par exemple US-A-4 094 777).

Les supports préférés ont habituellement une surface spécifique d'environ 20 à 300 $m^2$ x $g^{-1}$, ces valeurs n'étant pas limitatives.

L'incorporation d'un composé de cuivre, autre qu'un sulfure, à un support ou dispersant minéral solide peut être effectuée par toutes méthodes connues de l'Homme du métier, par exemple par mélange avec un composé de cuivre ou par imprégnation à l'aide d'une solution d'un composé de cuivre. Les composés de cuivre que l'on emploie habituellement sont des composés facilement transformables en oxyde de cuivre à des températures relativement basses.

Comme exemple de composé de cuivre on peut citer à titre non limitatif : les oxydes de cuivre ; l'hydroxyde de cuivre $Cu(OH)_2$ ; les sels basiques de cuivre, en particulier les carbonates de formules $CuCO_3$, $Cu(OH)_2$ et $2CuCO_3$, $Cu(OH)_2$ ; les sels et les complexes organiques du cuivre tels que les sels des acides carboxyliques, par exemple les formiates, les acétates, les tartrates, les citrates, les benzoate, les oxalates, les malonates, les succinates, les glycolates, les lactates et l'acetylacetonate et le nitrate de cuivre.

On préfère habituellement introduire le composé de cuivre par imprégnation du support à l'aide d'une solution aqueuse ou organique d'un composé de cuivre et de préférence à l'aide d'une solution aqueuse d'un composé de cuivre. On utilise avantageusement une solution aqueuse de nitrate de cuivre.

On peut éventuellement introduire sur le support une faible proportion d'un composé soluble d'argent. La quantité d'argent introduite sur le support exprimée en poids d'argent par rapport au support représente habituellement de 0 à 5 % en poids. D'autres métaux peuvent également être éventuellement présents, par exemple de fer.

La quantité de sulfure de cuivre sur le support est comprise entre 2 et 65 % (exprimé en poids de cuivre), de préférence 5 à 80 % et plus particulièrement 6 à 40 %.

Les masses de captation ainsi obtenues sont utilisées selon la présente invention pour purifier des charges gazeuses contenant de l'arsenic L'arsenic se trouve en majeure partie sous forme d'arsine $AsH_3$, des composés organométalliques de l'arsenic peuvent être présents.

Le domaine de température où les masses de captation sont efficaces est habituellement compris entre environ moins 50 °C et plus 200 °C. La captation d'arsenic et du mercure s'il est présent peut être réalisée à pression atmosphérique ou sous une pression plus basse ou plus élevée, la pression totale pouvant atteindre par exemple 10 MPa. Dans ces conditions, la charge à traiter est gazeuse. La V.V.H. pour des charges gazeuses (volume de charge par volume de masse de captation et par heure) est habituellement d'environ 500 à 50000 $h^{-1}$, mais on opère de préférence à une V.V.H. d'environ 2000 à 20000 $h^{-1}$ et avantageusement d'environ 4000 à 15000 $h^{-1}$.

Les fluides gazeux traités à l'aide des masses de captation conformes à l'invention peuvent renfermer par exemple de 1 nanogramme à 0,3 grammes d'arsenic et de 10 nanogrammes à 2 grammes de mercure ou plus, par mètre cube. Les gaz traités sont le plus souvent des hydrocarbures ou des mélanges d'hydrocarbures tels par exemple les gaz naturels renfermant une proportion majeure de méthane et une proportion mineure d'hydrocarbures en $C_2$ et/ou supérieurs et d'arsenic et de mercure.

On peut ainsi traiter un gaz naturel et/ou un condensat de gaz naturel en phase gazeuse.

Les gaz naturels contiennent en majeure partie du méthane, mais aussi de l'éthane et du propane. Les fractions $C_4$ (butènes) et $C_5$ + (pentiène, hexane...) associées avec le gaz naturel sont généralement appelées "condensats du gaz naturel" Les composés supérieurs aux butanes sont des liquides à température et pression normales.

Les conditions opératoires sont précisément choisies dans les fourchettes de valeurs P, T, indiquées, de façon à obtenir une fraction gazeuse et éventuellement une fraction liquide, seule la fraction gazeuse sera traitée conformément à l'invention.

Les gaz traités contiennent également souvent d'autres substances gazeuses telles que $CO_2$, eau, $H_2S$, en quantités variables.

Le gaz traité peut également être de l'hydrogène, ou d'autres gaz chargés en arsine (fabrication électronique par exemple) ; ce peut également être de l'air à condition d'opérer dans des conditions de température et/ou de pression telles que le contact avec le gaz ne provoque pas l'oxydation de la masse d'absorption ou d'une partie excessive de ladite masse. Il est également possible d'envisager le traitement de mélanges contenant plusieurs des composés ou gaz mentionnés ci-avant.

Tous les dispositifs connus de l'Homme du métier, et couramment utilisés pour la purification des fluides gazeux peuvent être employés. Les masses de captation sont utilisées sous forme de lit fixe à travers lequel passe la charge.

Le dispositif d'élimination d'arsenic peut par exemple être constitué d'un seul réacteur ou d'au moins deux réacteurs en parallèle mais on utilisera de préférence au moins deux réacteurs en série.

Si l'on considère le cas de trois réacteurs en série A, B, C, on opère de préférence comme suit : lorsque le premier réacteur A aura atteint une efficacité de captation qui ne sera plus que par exemple 90 % ou 70 % de son efficacité initiale, on procèdera à la régénération ou au remplacement de la masse de captation contenue dans A. Pendant le temps nécessaire à cette étape de régénération ou de remplacement, le fluide passera dans les réacteurs B et C ; après la régénération ou le remplacement de A, le fluide passera dans B et C puis dans A ; B sera ensuite régénéré ou remplacé lorsque son efficacité n'est plus que de par exemple 90 % ou 70 % de son efficacité initiale ; pendant ce temps le fluide passera sur C et A. Après la régénération ou le remplacement de B le fluide passe dans C, A puis B. On régénèrera ou on remplacera ensuite C et ainsi de suite.

L'exemple suivant illustre l'invention sans en limiter la portée.


EXEMPLE


On imprègne 1 kg de billes d'alumine autoclavée de 170 $m^2 xg^{-1}$ de surface spécifique et de volume poreux 1,2 $cm^3$ x $g^{-1}$ par 1,2 l d'une solution aqueuse renfermant 370 g de nitrate de cuivre trihydraté Cu-$(NO_3)_2$, $3H_2O$

On sèche et on calcine des billes d'alumines ainsi imprégnées durant 7 heures à 400°C sous courant d'air à une V.V.H. de 5000 $h^{-1}$ On obtient des billes dites de base pour la suite de l'expérimentation. Les billes ainsi obtenues sont, imprégnées au drageoir, au moyen de 1 l contenant 0,52 l d'eau et 0,48 l d'une solution aqueuse à 20 % en poids de sulfure d'ammonium. L'excès de soufre est éliminé par séchage à l'étuve à 200°C durant 10 heures sous courant d'azote (V.V.H. de 5000 $h^{-1}$).

La masse A obtenue renferme du sulfure de cuivre en quantité de 15 % par rapport au poids de la masse. L'analyse par diffraction X indique que tout le cuivre est sous forme de sulfure de cuivre. L'analyse chimique montre que le rapport atomique Cu/S est égal à 1,0.

La masse de captation d'arsenic obtenue a été testée dans les conditions suivantes. L'appareillage consiste en un réacteur tubulaire en métal dont l'inactivité pour la fixation de l'arsenic a été contrôlée. On introduit dans ce réacteur 100 ml de la masse de captation à tester et on fait passer un courant de gaz naturel renfermant de l'arsenic à une température de 60°C, sous une pression de 35 bars (3,5 MPa). Le lit de la masse de captation a été séparé en cinq zones de 12 g. La zone dite "zone 1" est la première a contacté la charge contenant l'arsenic.

La composition volumique centésimale du gaz naturel à épurer est de 84 % en $CH_4$, 0,6 % en hydrocarbures ayant 5 atomes de carbone et plus dans leur molécule, le reste étant constitué d'un mélange de $N_2$, $CO_2$, $C_2H_4$, $C_3H_8$ et $C_4H_{10}$. La quantité d'arsenic dans le gaz à l'entrée du réacteur est de $1.607 \times 10^{-4}$ g par heures.

La quantité d'arsenic subsistant dans les gaz après épuration est évaluée par différence entre la quantité d'arsenic dans la charge (connue) et la quantité d'arsenic totale détecté dans la masse de captation après test par mesure de fluorescence - X.

L'efficacité des masses de captation est définie par la relation.

$$E \% = 100 - \frac{\text{(poids en arsenic à l'entrée)} - \text{(poids en arsenic dans la masse)} \times 100}{\text{(poids en arsenic à l'entrée)}}$$

Les résultats montrent que la masse obtenue par le procédé de la présente invention possèdent une très bonne efficacité pour la captation d'arsenic.

| | | |
|---|---|---|
| Zone 1 | (ppm As) | 9651 |
| Zone 2 | (ppm As) | 3666 |
| Zone 3 | (ppm As) | 35 (limite de détection) |
| Zone 4 | (ppm As) | <30 |
| Zone 5 | (ppm As) | <30 |
| Total | (ppm As) | 13,352 |
| Total | (g As) | 0,1602 |
| Durée de test | (h) | 1000 |
| Total As entrée | (g) | 0,1607 |
| E % | | > 99,7 |

## Revendications

1. Procédé d'élimination d'arsenic dans une charge gazeuse contenant en majeure partie des arsines à raison de $10^{-9}$ à 0,3g $As/m^3$ caractérisé en ce que la charge circule sur une masse solide de captation constituée d'un support et d'au moins un composé de sulfure de cuivre, à une température entre - 50 et 200°C, avec une V.V.H. (volume de charge par volume de masse de captation et par heure) comprise entre 500 et $50000^{\,h^{-1}}$.

2. Procédé selon la revendication 1 caractérisé en ce que la charge gazeuse contient également du mercure.

3. Procédé selon l'une des revendications 1 ou 2 dans lequel la teneur en sulfure de cuivre sur le support est comprise entre 2% et 65% en poids (exprimé en cuivre).

4. Procédé selon l'une des revendications 1 à 3 dans lequel on opère en lit fixe.

5. Procédé selon l'une des revendications 1 à 4, caractérisé en ce que la charge gazeuse est un gaz naturel, un condensat de gaz naturel en phase gazeuse, ou un mélange des deux.

## Claims

1. A process for removing arsenic from a gaseous charge containing , in a major part, arsines ranging from 10-9 to 0.3 g $As/m^3$, characterized in that the charge circulates over a solid recovery mass constituted by a carrier and at least one copper sulphide compound, at a temperature between - 50 and + 200°C with a VVH (volume of charge by volume of recovery mass and per hour) of between 500 and 50,000 $h^{-1}$.

2. A process according to claim 1, characterized in that the gaseous charge also contains mercury.

3. A process according to one of claims 1 or 2, in which the copper sulphide content on the carrier is comprised between 2% and 65% by weight (expressed as copper).

4. A process according to one of claims 1 or 3, in which working is carried out in a fixed bed.

5. A process according to one of claims 1 to 4, characterized in that the gaseous charge is a natural gas, a natural gas condensate in the gaseous phase or a mixture of both.

**Patentansprüche**

1. Verfahren zur Beseitigung von Arsen in einer gasförmigen Charge, die zum Großteil Arsenwasserstoffe im Verhältnis von $10^{-9}$ bis 0,3 g As/m$^3$ enthält, dadurch gekennzeichnet, daß die Charge über eine feste Abscheidungsmasse, die aus einem Träger und wenigstens einer Kupfersulfidverbindung gebildet ist, bei einer Temperatur zwischen -50 und 200 °C mit einem V.V.H.-Verhältnis (Volumen Charge pro Volumen Abscheidungsmasse und pro Stunde) einschließlich zwischen 500 und 50000$^{h-1}$ fließt.

2. Verfahren nach Anspruch 1, dadurch gekennzeichnet, daß die gasförmige Charge gleichermaßen Quecksilber enthält.

3. Verfahren nach einem der Ansprüche 1 oder 2, bei welchem der Gehalt an Kupfersulfid auf dem Träger einschließlich zwischen 2 Gew.-% und 65 Gew.-% (ausgedrückt in Kupfer) beträgt.

4. Verfahren nach einem der Ansprüche 1 bis 3, bei welchem man im Festbett arbeitet.

5. Verfahren nach einem der Ansprüche 1 bis 4, dadurch gekennzeichnet, daß die gasförmige Charge ein Erdgas, ein Erdgaskondensat in Gasphase oder eine Mischung aus beidem ist.